# EUROPÄISCHE PATENTSCHRIFT

(11) **EP 0 935 142 B1**
(45) Veröffentlichungstag und Bekanntmachung des Hinweises auf die Patenterteilung: **10.03.2004**
(21) Anmeldenummer: 98124878.4
(22) Anmeldetag: 30.12.1998
(51) Int. Cl.: G01S 7/481, G01S 17/02, G01S 17/46, G01S 7/497

(54) **Optoelektronischer Sensor**
Opto-electronic sensor
Capteur optoélectronique

(30) Priorität: 06.02.1998 DE 19804803
(43) Veröffentlichungstag der Anmeldung: 11.08.1999
(73) Patentinhaber: Sick AG, 79183 Waldkirch, Breisgau (DE)
(72) Erfinder: Füger, Bernhard, 77654 Offenburg (DE); Schindler, Bernhard, 79263 Simonswald (DE); Kienzler, Bernd, 79286 Glottertal (DE)
(74) Vertreter: Finsterwald, Martin, Dr.

(56) Entgegenhaltungen:
- EP-A- 0 801 315
- DE-A- 2 924 685
- US-A- 4 412 129

## Beschreibung

Die Erfindung betrifft einen optoelektronischen Sensor zur Erkennung von Gegenständen innerhalb eines einstellbaren, räumlich begrenzten Überwachungsbereichs mit einem Sender zum Aussenden eines Sendelichtbündels entlang einer Sendestrahlachse in Richtung des Überwachungsbereichs, mit einem Empfänger zum Detektieren von Licht, das von einem innerhalb des Überwachungsbereichs befindlichen Gegenstand entlang einer Empfangsstrahlachse reflektiert oder remittiert wird, sowie mit einer dem Sender zugeordneten Sendefokussierlinse und/oder einer dem Empfänger zugeordneten Empfangsfrontlinse, gemäß dem Anspruch 1.

Derartige Sensoren dienen zum Erkennen von Gegenständen, die sich innerhalb des Überwachungsbereichs befinden und von dort das sie beaufschlagende Licht des Senders in Richtung des Empfängers reflektieren oder remittieren. Dabei fallen die Sendestrahlachse und die Empfangsstrahlachse nicht zusammen, so daß die räumliche Begrenzung des Überwachungsbereichs, insbesondere sein Abstand vom Sensor (Tastweite), nach dem Triangulationsprinzip definiert ist durch den Raumbereich, in dem das Sendelichtbündel den von der Empfangsfrontlinse auf den Empfänger abgebildeten Raumbereich kreuzt. Gegenstände in geringerem Abstand vom Sensor als dessen Tastweite (Vordergrund) oder Gegenstände in größerem Abstand (Hintergrund) werden dementsprechend ausgeblendet, also nicht vom Sensor erfaßt. Die Tastweite des Sensors läßt sich insbesondere durch entsprechende Wahl des Kreuzungspunkts von Sendestrahlachse und Empfangsstrahlachse einstellen.

Bekannte derartige Sensoren besitzen den Nachteil, daß die Einstellung ihres Überwachungsbereichs, insbesondere ihrer Tastweite, nur mit hohem mechanischen Aufwand und mit nicht immer optimaler Auflösung erzielt wird.

Aus der EP 0801315 A1 ist eine elektro-optische Vorrichtung zur Detektion eines Gegenstandes in einem einstellbaren Abstand bekannt, die eine Hintergrundausblendung ermöglicht. Hierfür sind die Sendeoptik und die Empfangsoptik beweglich und durch Drehzapfen verschwenkbar an einer Tragestruktur der Vorrichtung befestigt.

Es ist eine Aufgabe der Erfindung, einen optoelektronischen Sensor der eingangs genannten Art zu schaffen, der es bei einfachem Aufbau ermöglicht, seine Tastweite mit hoher Auflösung über einen weiten Bereich beliebig einzustellen.

Erfindungsgemäß wird diese Aufgabe durch die Merkmale des Anspruchs 1 gelöst.

Durch Bewegung der Sendefokussierlinse oder der Empfangsfrontlinse relativ zu dem Sensorgehäuse können also bei dem erfindungsgemäßen Sensor der Triangulationswinkel und der Basisabstand verändert werden, um den Überwachungsbereich des Sensors, insbesondere seine Tastweite, einer bestimmten Anwendung beliebig anzupassen.

Es ist ein Vorteil, daß die Einstellung des Überwachungsbereichs allein durch entsprechende Bewegung einer Linse erreicht wird, da dies einen mechanisch einfachen und platzsparenden Aufbau des Sensors ermöglicht. Es sind keine zusätzlichen mechanischen oder optischen Elemente erforderlich, wie beispielsweise bewegliche Umlenkspiegel. Da für die Verwirklichung des Sensors somit lediglich eine geringe Anzahl an Bauteilen von jeweils geringen Massen benötigt wird, ist zudem ein schwing- und vibrationsstabiler Aufbau des Sensors möglich.

Indem sowohl der Sender als auch der Empfänger gehäusefest montiert sind, wird ein einfacher und platzsparender Aufbau des Sensors noch weiter begünstigt, und es müssen für die Einstellung unterschiedlicher Überwachungsbereiche keine elektrischen oder elektronischen Elemente oder Zuführleitungen bewegt werden. Dies erhöht die Zuverlässigkeit des Sensors in vorteilhafter Weise.

Bei dem erfindungsgemäßen Sensor kann für geringe Tastweiten ein geringer und für große Tastweiten ein entsprechend großer Basisabstand eingestellt werden. Dies ermöglicht in vorteilhafter Weise entlang eines großen möglichen Tastweitenbereichs eine hohe und im wesentlichen lineare Auflösung des Sensors, d.h. ein entsprechendes räumliches Unterscheidungsvermögen des Sensors bezüglich des eingestellten Überwachungsbereichs.

Die Möglichkeit zur Einstellung des Basisabstandes in Abhängigkeit von dem eingestellten Triangulationswinkel erlaubt es also, für bestimmte Tastweiten jeweils die räumliche Erstreckung des Überwachungsbereichs entlang der Sendestrahlachse vorzugeben, also die Erstreckung des Schnittbereichs des Sendelichtbündels und des auf den Empfänger abgebildeten Raumbereichs. Dadurch lassen sich für beliebige Tastweiten geringe Schwarz/Weiß-Verschiebungen realisieren; d.h. Fehlortungen von Gegenständen, die sich an unterschiedlichen Positionen entlang der Sendestrahlachse befinden und die aufgrund stark unterschiedlichen Reflexionsvermögens ihrer Oberfläche dennoch jeweils die gleiche Lichtmenge in Richtung des Empfängers abgeben, lassen sich weitgehend vermeiden.

Gleichzeitig zu der genannten Bewegung der betreffenden Linse mittels des Einstellmittels auch die Schnittweite geändert wird, also der Abstand zwischen dieser Linse und dem Sender bzw. Empfänger. Indem die Änderung der Schnittweite in einer der jeweils eingestellten Tastweite entsprechenden Weise erfolgt, kann zum einen das Sendelichtbündel auf einen der Tastweite entsprechenden Abstand vom Sensor fokussiert werden, um lediglich auf einem innerhalb des Überwachungsbereichs befindlichen Gegenstand einen konzentrierten Sendelichtfleck zu erzeugen. Durch eine derartige Einstellung der Sende-Schnittweite kann somit die Auflösung der Einstellung des Sensors erhöht und insbesondere der Überwachungsbereich senkrecht zur Sendestrahlachse räumlich begrenzt werden.

Zum anderen kann durch Änderung der Empfangs-Schnittweite für jede eingestellte Tastweite die Abbildung eines optimal fokussierten Empfangslichtflecks auf den Empfänger und somit ebenfalls eine hohe Auflösung der Einstellung des Überwachungsbereichs erreicht werden.

Ferner wird mit der genannten Bewegung der betreffenden Linse auch die Ausrichtung, also die Winkellage, der optischen Achse der Linse bezüglich des Sensorgehäuses verändert. Dies erleichtert insbesondere die optimale Abbildung des eingestellten Überwachungsbereichs mittels der Empfangsfrontlinse auf den Empfänger, und trägt somit ebenfalls zu einer hohen Auflösung des erfindungsgemäßen Sensors bei. Da nämlich für verschiedene Tastweiten - wie vorstehend beschrieben - unterschiedliche Triangulationswinkel bzw. Basisabstände eingestellt werden, kann durch gleichzeitiges entsprechendes Ausrichten der Empfangsfrontlinse, insbesondere durch deren Verkippen, erreicht werden, daß ein dem eingestellten Überwachungsbereich entsprechender Empfangslichtfleck den Empfänger immer optimal beaufschlagt. Der entsprechende Vorteil trifft auch für die Sendefokussierlinse zu.

Somit weist der erfindungsgemäße Sensor einen einfachen Mechanismus auf, durch den zur hochauflösenden Einstellung eines bestimmten Überwachungsbereichs der Triangulationswinkel, der Basisabstand, die Schnittweite und die Ausrichtung der betreffenden Linse alle gleichzeitig und in Abhängigkeit voneinander so geändert werden, daß ein Gegenstand, der sich innerhalb des Überwachungsbereichs und somit in einem der eingestellten Tastweite entsprechenden Abstand vom Sensor befindet, optimal von dem Sender lichtbeaufschlagt wird und/oder optimal auf den Empfänger abgebildet wird.

Hierfür ist es auf vorteilhaft einfache Weise möglich, das Einstellmittel als einen länglichen Betätigungsstift auszubilden und/oder es direkt oder indirekt mit der betreffenden Linse zu verbinden, insbesondere mittels einer Gelenkverbindung, die bei geradliniger Bewegung des Einstellmittels gleichzeitig zu einer entsprechenden Translationsbewegung eine Kippbewegung der Linse und somit beispielsweise eine Änderung der Ausrichtung deren optischer Achse ermöglicht.

Eine derartige Kippbewegung kann bei geradliniger Bewegung des Einstellmittels auf einfache Weise durch wenigstens ein sendeseitiges bzw. empfangsseitiges Führungsmittel erreicht werden, das einen bestimmten Verlauf der Bewegung der dem Führungsmittel zugeordneten Linse erzwingt. Dieses Führungsmittel kann beispielsweise aus Führungsnut und zugeordnetem Führungszapfen oder aus Führungsschiene und zugeordneter Führungsklammer bestehen. Dabei kann jeweils ein Teil des Führungsmittels, beispielsweise als Kulisse, gehäusefest oder an dem Einstellmittel angeordnet sein, und der jeweils zugeordnete andere Teil des Führungsmittels kann direkt oder indirekt mit der Linse verbunden sein.

Es ist bevorzugt, wenn der erfindungsgemäße Sensor eine auf die vorstehend erläuterte Weise mittels des Einstellmittels bewegbare Empfangsfrontlinse aufweist sowie eine gehäusefeste Sendefrontlinse und eine Sendefokussierlinse, die aufgrund eines entsprechenden Zusammenwirkens des Einstellmittels und eines Führungsmittels gleichzeitig zu und abhängig von der Bewegung der Empfangsfrontlinse derart geradlinig bewegt wird, daß allein ihr Abstand zum Sender und somit die Sende-Schnittweite geändert wird (vgl. Figuren). Diese Ausführungsform gewährleistet eine optimale Fokussierung sowohl des Sendelichtbündels als auch des Empfangslichts bei gleichzeitig einfachem Aufbau des Sensors.

Die vorstehend genannten Vorteile der Erfindung bleiben jedoch auch gewahrt für Ausführungsformen, bei denen lediglich entweder die Empfangsoptik oder die Sendeoptik bewegt werden kann und die Sendeoptik bzw. die Empfangsoptik dagegen gehäusefest montiert ist, oder bei denen die Empfangsoptik und gleichzeitig hierzu die Sendeoptik derart mittels des Einstellmittels bewegbar sind, daß jeweils der Triangulationswinkel, der Basisabstand sowie die Schnittweite und Ausrichtung der betreffenden Linse verändert werden.

Weitere bevorzugte Ausführungsformen der Erfindung sind in den Unteransprüchen beschrieben. Die Erfindung wird nachfolgend anhand von Ausführungsbeispielen unter Bezugnahme auf die Zeichnungen beschrieben; in diesen zeigen:
- Fig. 1a und 1b: eine schematische Seitenansicht bzw. Frontansicht von Teilen eines erfindungsgemäßen Sensors in einer Ferneinstellung, und
- Fig. 2: eine schematische Seitenansicht von Teilen des Sensors gemäß Fig. 1a und 1b in einer Naheinstellung.

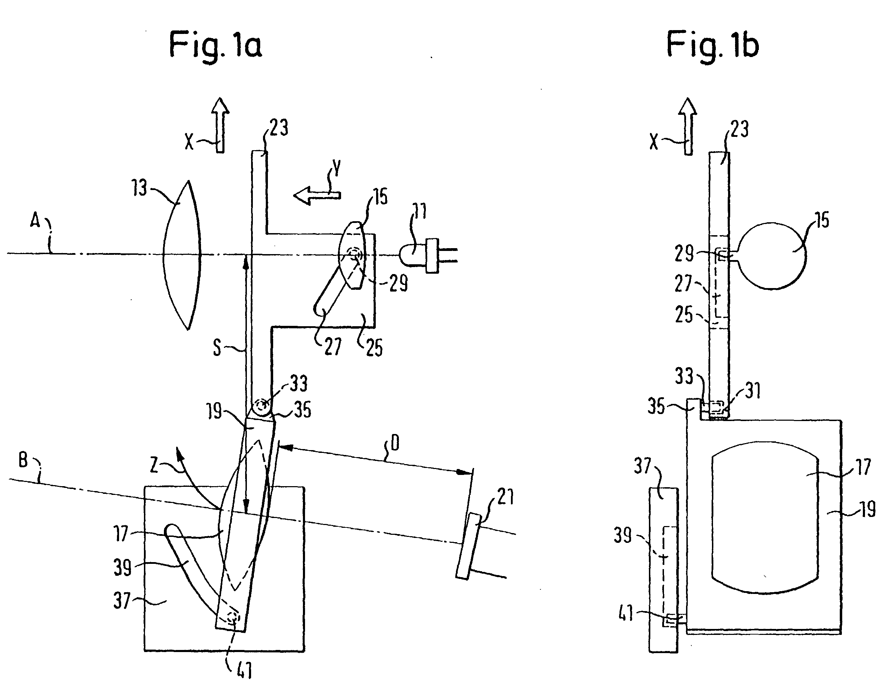

Die Fig. 1a und 1b zeigen in schematischer Weise eine Seitenansicht bzw. eine Frontansicht eines erfindungsgemäßen Sensors, dessen Tastweite auf einen Fernbereich eingestellt ist.

Dieser Sensor weist einen Sender 11 auf, beispielsweise eine lichtemittierende Diode, zum Aussenden eines Sendelichtbündels entlang einer Sendestrahlachse A. Der Sender 11 ist an einem in den Figuren nicht dargestellten Gehäuse fest montiert.

Entlang der Sendestrahlachse A ist eine Sendeoptik angeordnet. Diese weist zum einen eine runde, gehäusefest montierte Sendefrontlinse 13 auf, die in der Frontansicht gemäß Fig. 1b nicht dargestellt ist. Zum anderen besitzt sie eine im wesentlichen runde, zwischen dem Sender 11 und der Sendefrontlinse 13 angeordnete und entlang der Sendestrahlachse A verschiebbar gelagerte Sendefokussierlinse 15.

Unterhalb der Sendeoptik befindet sich eine bewegliche Empfangsfrontlinse 17, die innerhalb einer rechteckigen Linsenfassung 19 befestigt ist. Die optische Achse der Empfangsfrontlinse 17 definiert eine Empfangsstrahlachse B, an deren innerhalb des Sensors gelegenen Ende in einem Abstand D von der Empfangsfrontlinse 17 ein Empfänger 21 angeordnet ist. Dieser Abstand D entspricht der Empfangs-Schnittweite. Bei dem Empfänger 21 handelt es sich um ein lichtempfindliches Photoelement.

Die Empfangsfrontlinse 17 bzw. die Empfangsstrahlachse B ist bezüglich der Sendeoptik dergestalt geneigt, daß die Empfangsstrahlachse B die Sendestrahlachse A unter einem bestimmten Triangulationswinkel und in einem Kreuzungspunkt schneidet, der in der Darstellung gemäß Fig. 1a nicht mehr gezeigt ist, sich in einem der eingestellten Tastweite des Sensors entsprechenden Abstand von der Sendefrontlinse 13 befindet und das Zentrum des eingestellten Überwachungsbereichs definiert.

Das Zentrum der Empfangsfrontlinse 17 befindet sich in einem Abstand S von der Sendestrahlachse A, der im folgenden dem Basisabstand der Triangulation gleichgesetzt wird.

Ferner weist der in den Figuren 1a und 1b dargestellte Sensor einen länglichen, entlang einer Richtung X ausgerichteten und verschiebbaren Betätigungsstift 23 auf. Dieser ist auf halber Höhe mit einer flächigen, parallel zur Sendestrahlachse A und der Sendefokussierlinse 15 benachbart angeordneten sendeseitigen Führungskulisse 25 und mit einer darin diagonal verlaufenden Führungsnut 27 versehen. In die Führungsnut 27 greift ein Führungszapfen 29 ein, der an der der Führungskulisse 25 zugewandten Seite der Sendefokussierlinse 15 angeformt ist.

Weiterhin besitzt der Betätigungsstift 23 an seinem unteren Ende ein Gelenkloch 31, in das ein Gelenkzapfen 33 hineinragt, der mit einem an der Oberseite der Linsenfassung 19 der Empfangsfrontlinse 17 angeformten Dreiecksansatz 35 verbunden ist.

Der Linsenfassung 19 seitlich benachbart und innerhalb der von der Sendestrahlachse A und der Empfangsstrahlachse B aufgespannten Ebene befindet sich eine flächige, gehäusefest montierte empfangsseitige Führungskulisse 37. Diese weist an ihrer der Empfangsfrontlinse 17 zugewandten Seite eine kurvenförmige Führungsnut 39 auf. In diese Führungsnut 39 ragt ein an dem unteren Bereich der Linsenfassung 19 der Empfangsfrontlinse 17 angeformter Führungszapfen 41 hinein.

Der in den Fig. 1a und 1b dargestellte erfindungsgemäße Sensor dient zum Erfassen von Gegenständen, die sich innerhalb eines einstellbaren Überwachungsbereichs befinden. Hierfür sendet der Sender 11 Licht aus entlang der Sendestrahlachse A. Dieses Sendelicht wird mittels der Sendefokussierlinse 15 und der Sendefrontlinse 13 zu einem Sendelichtbündel fokussiert, so daß ein Gegenstand, der sich innerhalb des Überwachungsbereichs befindet, von einem konzentrierten Sendelichtfleck beaufschlagt wird.

Ein derartig von Sendelicht beaufschlagter Gegenstand reflektiert oder remittiert Licht unter anderem entlang der Empfangsstrahlachse B in Richtung der Empfangsfrontlinse 17. Diese konzentriert das von einem innerhalb des Überwachungsbereichs befindlichen Gegenstand stammende Licht auf den Empfänger 21, der ein dem empfangenen Lichtsignal entsprechendes elektrisches Signal ausgeben kann. Dieses elektrische Signal kann durch eine in den Figuren nicht dargestellte Auswerteelektronik zur Feststellung des Vorhandenseins eines Gegenstands im Überwachungsbereich ausgewertet werden, beispielsweise indem das Überschreiten eines vorgegebenen Mindestsignals überprüft wird.

In der Darstellung gemäß den Fig. 1a und 1b ist der Sensor auf maximal mögliche Tastweite eingestellt. Hierfür ist durch entsprechende Relativlage der beweglichen Empfangsfrontlinse 17 zum Sensorgehäuse und somit zum gehäusefesten Empfänger 21 ein geeigneter Triangulationswinkel eingestellt, unter dem sich die Sendestrahlachse A und die Empfangsstrahlachse B in dem gewünschten Abstand (Tastweite) vom Sensor kreuzen, wobei diesem Triangulationswinkel aufgrund der gehäusefesten Montage des Empfängers 21 genau der in Fig. 1a gezeigte Basisabstand S entspricht. Der somit eingestellten Tastweite entsprechend sind der Abstand der Sendefokussierlinse 15 vom Sender 11 bzw. von der Sendefrontlinse 13 und der Abstand D der Empfangsfrontlinse 17 von dem Empfänger 21 eingestellt, so daß das Licht des Senders 11 optimal auf den Überwachungsbereich bzw. das von einem Gegenstand innerhalb des Überwachungsbereichs reflektierte oder remittierte Licht optimal auf den Empfänger 21 abgebildet wird.

Der erfindungsgemäße Sensor ermöglicht andere Einstellungen als in den Fig. 1a und 1b dargestellt. Hierfür wird der Betätigungsstift 23 in Richtung X bewegt.

Dies bewirkt zum einem aufgrund des Zusammenspiels der sendeseitigen Führungskulisse 25 und des Führungszapfens 29 der Sendefokussierlinse 15, daß sich die Sendefokussierlinse 15 in Richtung Y zu der Sendefrontlinse 13 hin und von dem Sender 11 weg bewegt. Die Führungskulisse 25 ist nämlich lediglich in Richtung der Sendestrahlachse A geradlinig bewegbar gelagert, so daß eine Bewegung der Führungskulisse 25 in Richtung X die Sendefokussierlinse 15 mittels des Führungszapfens 29 zu einer Bewegung in Richtung Y zwingt. Durch eine derartige Bewegung der Sendefokussierlinse 15 in Richtung Y wird das von dem Sender 11 ausgehende Sendelichtbündel auf eine immer geringere Tastweite fokussiert.

Zum anderen bewirkt die Bewegung des Betätigungsstifts 23 in Richtung X eine entsprechende Bewegung des Gelenkzapfens 33 der Linsenfassung 19, so daß auch die Empfangsfrontlinse 17 eine Bewegung in Richtung X durchführt. Dadurch wird ein geringerer Basisabstand S eingestellt und - aufgrund der gehäusefesten Lage des Empfängers 21 - gleichzeitig ein größerer Triangulationswinkel, unter dem die Empfangsstrahlachse B die Sendestrahlachse A kreuzt, sowie eine geringere Tastweite, also ein geringerer Abstand dieses Kreuzungspunkts vom Sensor. Mit diesem Kreuzungspunkt von Sendestrahlachse A und Empfangsstrahlachse B ist also die neue Lage des Überwachungsbereichs prinzipiell eingestellt.

Außerdem vollzieht die Empfangsfrontlinse 17 aufgrund des Zusammenspiels von empfangsseitiger Führungskulisse 37 und Führungszapfen 41 der Linsenfassung 19 gleichzeitig zu ihrer geradlinigen Bewegung X eine Kippbewegung Z, und zwar derart, daß ihre optische Achse bei jeder eingestellten Position an der Lichteintrittsseite in Richtung des Überwachungsbereichs und an der Lichtaustrittsseite in Richtung des Empfängers 21 ausgerichtet ist.

Die Bewegung der Empfangsfrontlinse 17 sowohl in Richtung X als auch in Richtung Z bewirken schließlich auch noch eine Vergrößerung ihres Abstands D zum Empfänger 21, also der Empfangs-Schnittweite.

Der kurvenförmige Verlauf der Führungsnut 39 ist also genau so gewählt, daß bei jeder durch den Basisabstand S prinzipiell definierten Einstellung eines Überwachungsbereichs bzw. einer Tastweite und eines Triangulationswinkels gleichzeitig die Ausrichtung der Empfangsfrontlinse 17 und die Empfangs-Schnittweite D eine optimale optische Abbildung dieses Überwachungsbereichs auf den Empfänger 21 gewährleisten.

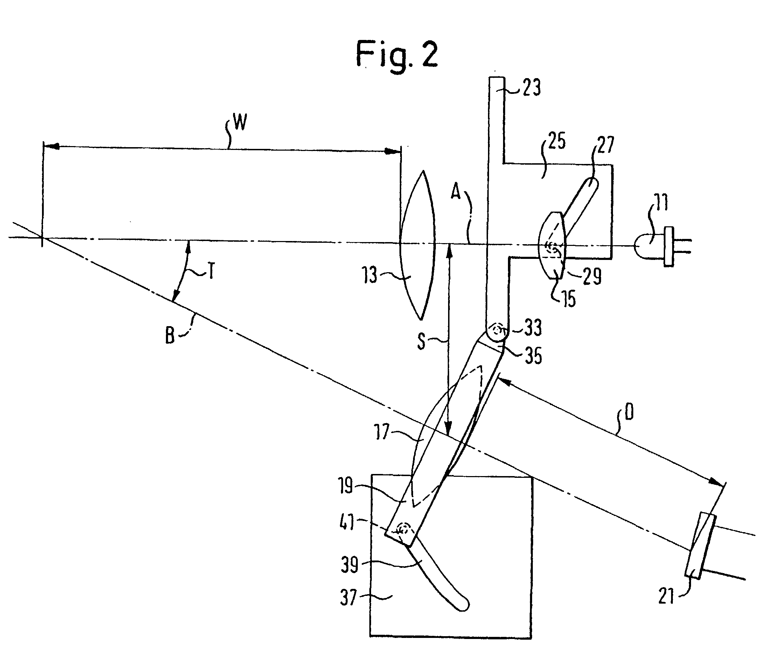

Die bei fortdauernder Bewegung des Betätigungsstifts 23 in Richtung X erreichte Position des Betätigungsstifts 23, der Sendefokussierlinse 15 und der Empfangsfrontlinse 17 ist in Fig. 2 gezeigt, die Teile des in den Figuren 1a und 1b dargestellten Sensors zeigt und der Seitenansicht gemäß Fig. 1a entspricht. Gleiche Bezugszeichen in Fig. 2 wie in den Fig. 1a und 1b bezeichnen dabei jeweils dieselben Teile, Richtungen bzw. Abstände.

Der in Fig. 2 dargestellte Sensor ist auf eine minimale Tastweite W eingestellt. Hierfür befindet sich die Empfangsfrontlinse 17 in geringem Basisabstand S von der Sendestrahlachse A, und die Sendestrahlachse A und die Empfangsstrahlachse B schließen einen vergleichsweise großen Triangulationswinkel T ein. Durch die nunmehr erreichte Position der Sendefokussierlinse 15 ist das Sendelichtbündel auf einen Punkt entlang der Sendestrahlachse A konzentriert, der sich genau in einem der Tastweite entsprechenden Abstand W von der Sendefrontlinse 13 befindet. Licht von einem Gegenstand, der sich in diesem Abstand W auf der Sendestrahlachse A befindet, wird aufgrund der erfolgten Linearbewegung X und Kippbewegung Z der Empfangsfrontlinse 17 bzw. der dadurch erzielten Einstellung der Empfangs-Schnittweite D und der Ausrichtung der Empfangsfrontlinse 17 optimal auf den Empfänger 21 fokussiert.

Der erfindungsgemäße Sensor ermöglicht somit eine beliebige Einstellung von Tastweiten W innerhalb der beiden in den Fig. 1a und 1b bzw. in der Fig. 2 gezeigten Extreme. Durch entsprechende Ausgestaltung des Betätigungsmechanismus, insbesondere des Verlaufs der Führungsnuten 27, 39, ist es möglich, für jede eingestellte Tastweite W eine optimale Abbildung sowohl des Sendelichts auf den Überwachungsbereich als auch des Empfangslichts auf den Empfänger 21 zu erreichen.

Da für eine Ferneinstellung des Sensors - wie in den Fig. 1a und 1b dargestellt - ein großer Basisabstand S zwischen Empfangsfrontlinse 17 und Sendestrahlachse A vorgesehen werden kann, ist es möglich, aufgrund verbesserter Triangulationsbedingungen vergleichsweise große Tastweiten W und hierbei jeweils eine hohe Auflösung einzustellen.

Indem für eine Naheinstellung des Sensors dagegen - wie in Fig. 2 gezeigt - ein geringer Basisabstand S eingestellt wird, bleibt die auf die Richtung der Sendeachse A bezogene Auflösung des Sensors für alle Tastweiten, die zwischen den in Fig. 1a und 1b bzw. Fig. 2 gezeigten Extremen liegen, näherungsweise gleich (lineare Auflösung).

Der Empfänger 21 ist - wie aus den Figuren ersichtlich - so angeordnet, daß das Empfangslichtbündel seine lichtempfindlichen Fläche bei den zwischen den beiden genannten Extremeinstellungen des Sensors eingestellten Tastweiten in einem symmetrischen Winkelbereich beaufschlagt. Um eine bei geringeren Tastweiten aufgrund des größeren Empfangslichtbündel-Raumwinkels möglicherweise auftretende Lichtbeaufschlagung des Empfängers 21 mit höherer Intensität auszugleichen, kann der Empfänger auch so angeordnet sein, daß er genau bei der maximalen Ferneinstellung des Sensors mit größtmöglicher Intensität, also im wesentlichen parallel zur Flächennormale seiner lichtempfindlichen Fläche, empfangslichtbeaufschlagt wird.

Die auflösungsoptimierte Tastweiteneinstellung des Sensors wird bei einfachem und platzsparendem Aufbau erreicht. Zusätzlich zu den in den Figuren dargestellten Teilen, nämlich der Sendefokussierlinse 15, der Empfangsfrontlinse 17, dem Betätigungsstift 23 und der empfangsseitigen Führungskulisse 37, sind lediglich gehäusefeste Führungselemente erforderlich, die eine geradlinige Bewegung des Betätigungsstifts 23 in Richtung X bzw. der Sendefokussierlinse 15 entlang der Sendestrahlachse A gewährleisten. Demgegenüber ist es nicht erforderlich, den Sender 11 oder den Empfänger 21 zu bewegen, so daß durch deren gehäusefeste Montage eine zuverlässige Funktion der elektrischen oder elektronischen Komponenten des Sensors sichergestellt ist.

Im Gegensatz zu der schematischen Darstellung gemäß den Fig. 1a, 1b und 2 ist es möglich, zur Erzielung einer höheren Stabilität die Führungskulissen 25, 37 und das Gelenkloch 31 sowie die zugeordneten Führungszapfen 29, 41 bzw. den zugeordneten Gelenkzapfen 33 auf beiden Seiten der Sendefokussierlinse 15 bzw. der Empfangsfrontlinse 17 vorzusehen, also auch auf der bezüglich der Darstellung gemäß Fig. 1b rechten Seite des Sensors.

Alternativ zu der Darstellung gemäß der Fig. 1a, 1b und 2 ist es auch möglich, den Betätigungsstift 23 nicht direkt gelenkig mit der Linsenfassung 19 der Empfangsfrontlinse 17 zu verbinden, sondern eine an dem Betätigungsstift 23 angeformte Führungskulisse vorzusehen, mittels derer die Empfangsfrontlinse 17 indirekt zu einer Bewegung veranlaßt wird, entsprechend dem in den Figuren für die Sendefokussierlinse 15 gezeigten Mechanismus.

### Bezugszeichenliste

- 11: Sender
- 13: Sendefrontlinse
- 15: Sendefokussierlinse
- 17: Empfangsfrontlinse
- 19: Linsenfassung
- 21: Empfänger
- 23: Betätigungsstift
- 25: Führungskulisse
- 27: Führungsnut
- 29: Führungszapfen
- 31: Gelenkloch
- 33: Gelenkzapfen
- 35: Dreiecksansatz
- 37: Führungskulisse
- 39: Führungsnut
- 41: Führungszapfen

- A: Sendestrahlachse
- B: Empfangsstrahlachse
- D: Empfangs-Schnittweite
- S: Basisabstand
- T: Triangulationswinkel
- W: Tastweite
- X: Betätigungsrichtung
- Y: Bewegungsrichtung der Sendefokussierlinse
- Z: Schwenkrichtung der Empfangsfrontlinse

## Patentansprüche

1. Optoelektronischer Sensor zur Erkennung von Gegenständen innerhalb eines einstellbaren, räumlich begrenzten Überwachungsbereichs,
mit einem Sender (11) zum Aussenden eines Sendelichtbündels entlang einer Sendestrahlachse (A) in Richtung des Überwachungsbereichs,
mit einem Empfänger (21) zum Detektieren von Licht, das von einem innerhalb des Überwachungsbereichs befindlichen Gegenstand entlang einer Empfangsstrahlachse (B) reflektiert oder remittiert wird, sowie mit einer dem Sender (11) zugeordneten Sendefokussierlinse (15) und einer dem Empfänger (21) zugeordneten Empfangsfrontlinse (17),
wobei der Sender (11) und der Empfänger (21) jeweils ortsfest innerhalb eines Gehäuses angeordnet sind, und
wobei die Sendefokussierlinse (15) und die Empfangsfrontlinse (17) mittels eines Einstellmittels bezüglich des Gehäuses bewegbar sind,
**dadurch gekennzeichnet,**
**daß** bei Betätigung des Einstellmittels der Verlauf der Bewegung der Sendefokussierlinse (15) durch ein sendeseitiges Führungsmittel und der Verlauf der Bewegung der Empfangsfrontlinse (17) durch ein empfangsseitiges Führungsmittel gleichzeitig derart steuerbar sind, daß
- durch die Bewegung der Sendefokussierlinse (15) der Abstand zwischen der Sendefokussierlinse (15) und dem Sender (11) veränderbar ist und
- durch die Bewegung der Empfangsfrontlinse (17) der Triangulationswinkel (T) zwischen der Sendestrahlachse (A) und der Empfangsstrahlachse (B), der Basisabstand (S) zwischen der Sendestrahlachse (A) und der Empfangsstrahlachse (B) am Ort des Sensors, der Abstand (D) zwischen der Empfangsfrontlinse (17) und dem Empfänger (21), und die Ausrichtung der Empfangsfrontlinse (17) veränderbar sind.

2. Optoelektronischer Sensor nach Anspruch 1,
**dadurch gekennzeichnet,**
**daß** mittels Betätigung des Einstellmittels der Triangulationswinkel (T), der Basisabstand (S), die Sende-Schnittweite, die Empfangs-Schnittweite (D) und die Ausrichtung der Empfangsfrontlinse (17) derart veränderbar sind,
**daß** bei jeder Stellung des Einstellmittels das Sendelichtbündel des Senders (11) im wesentlichen auf den Überwachungsbereich fokussiert ist, und/oder
**daß** bei jeder Stellung des Einstellmittels das Licht, welches von einem innerhalb des Überwachungsbereichs befindlichen Gegenstand entlang der Empfangsstrahlachse (B) reflektiert oder remittiert wird, im wesentlichen auf den Empfänger (21) fokussiert ist.

3. Optoelektronischer Sensor nach einem der vorstehenden Ansprüche,
**dadurch gekennzeichnet,**
**daß** das Einstellmittel mit der Sendefokussierlinse (15) oder mit einer Linsenfassung, an der die Sendefokussierlinse (15) befestigt ist, insbesondere gelenkig verbunden ist, und/oder
**daß** das Einstellmittel mit der Empfangsfrontlinse (17) oder mit einer Linsenfassung (19), an der die Empfangsfrontlinse (17) befestigt ist, insbesondere gelenkig verbunden ist.

4. Optoelektronischer Sensor nach einem der vorstehenden Ansprüche,
**dadurch gekennzeichnet,**
**daß** das Einstellmittel einen Betätigungsstift (23) aufweist.

5. Optoelektronischer Sensor nach einem der vorstehenden Ansprüche,
**dadurch gekennzeichnet,**
**daß** das sendeseitige oder das empfangsseitige Führungsmittel eine Kulisse (25, 37) aufweist mit einem Führungselement (27, 39), in das ein zugeordnetes Eingriffselement (29, 41) hineinragt,
wobei entweder die Kulisse (37) gehäusefest angeordnet und das Eingriffselement (41) mit der dem Führungsmittel zugeordneten Linse (17) oder mit einer Linsenfassung (19), an der die zugeordnete Linse (17) befestigt ist, verbunden ist, oder die Kulisse mit der dem Führungsmittel zugeordneten Linse oder mit einer Linsenfassung, an der die zugeordnete Linse befestigt ist, verbunden und das Eingriffselement gehäusefest angeordnet ist, oder
wobei entweder die Kulisse (25) mit dem Einstellmittel (23) verbunden und das Eingriffselement (29) mit der dem Führungsmittel zugeordneten Linse (15) oder mit einer Linsenfassung, an der die zugeordnete Linse (15) befestigt ist, verbunden ist, oder die Kulisse mit der dem Führungsmittel zugeordneten Linse oder mit einer Linsenfassung, an der die zugeordnete Linse befestigt ist, verbunden und das Eingriffselement mit dem Einstellmittel verbunden ist.

## Claims

1. An optoelectronic sensor for the detection of objects within an adjustable, spatially bounded monitored zone,
having a transmitter (11) for the transmission of a transmitted light beam along a transmitted ray axis (A) in the direction of the monitored zone;
having a receiver (21) for the detection of light which is reflected or remitted from an object located within the monitored zone along a received ray axis (B);
and having a transmission focusing lens (15) associated with the transmitter (11) and a reception front lens (17) associated with the receiver (21).
wherein the transmitter (11) and the receiver (21) are each arranged at a fixed position inside a housing, and
wherein the transmission focusing lens (15) and the reception front lens (17) are movable by means of an adjustment means with respect to the housing,
**characterised in that**,
when the adjustment means is actuated, the path of the movement of the transmission focusing lens (15) can be controlled by a guidance means on the transmitter side and the path of the movement of the reception front lens (17) can simultaneously be controlled by a guidance means on the receiver side; **in that**
- the spacing between the transmission focusing lens (15) and the transmitter (11) can be changed by the movement of the transmission focusing lens (15); and
- the triangulation angle (T) between the transmitted ray axis (A) and the received ray axis (B) is changeable by the movement of the reception front lens (17), the basic spacing (S) between the transmitted ray axis (A) and the received ray axis (B) is changeable at the position of the sensor, and the spacing (D) between the reception front lens (17) and the receiver (21), and the alignment of the reception front lens (17) are changeable.

2. An optoelectronic sensor in accordance with claim 1, **characterised in that** the basic spacing (S), the back focal length at the transmitter side, the back focal length at the receiver side (D) and the alignment of the reception front lens (17) are changeable by means of an actuation of the adjustment means such that the transmitted light beam of the transmitter (11) is substantially focused on the monitored zone in every position of the adjustment means; and/or such that the light reflected or remitted from an object located within the monitored zone along the received ray axis (B) is substantially focused on the receiver (21) in every position of the adjustment means.

3. An optoelectronic sensor in accordance with any of the preceding claims, **characterised in that** the adjustment means is connected, in particular connected in an articulated manner, to the transmission focusing lens (15) or to a lens mount to which the transmission focusing lens (15) is secured; and/ or **in that** the adjustment means is connected, in particular connected in an articulated manner, to the reception front lens (17) or to a lens mount (19) to which the reception front lens (17) is secured.

4. An optoelectronic sensor in accordance with any of the preceding claims, **characterised in that** the adjustment means has an actuation pin (23).

5. An optoelectronic sensor in accordance with any of the preceding claims, **characterised in that** the guidance means on the transmitter side or on the receiver side has a cam track (25, 37) with a guidance element (27, 39) into which an associated engagement element (29, 41) projects, wherein either the cam track (37) is fixedly arranged with respect to the housing and the engagement element (41) is connected to the lens (17) associated with the guidance means or to a lens mount (19) to which the associated lens (17) is secured, or the cam track is connected to the lens associated with the guidance means or to a lens mount to which the associated lens is secured, and the engagement element is arranged fixedly with respect to the housing or wherein either the cam track (25) is connected to the adjustment means (23) and the engagement element (29) is connected to the lens (15) associated with the guidance means or to a lens mount to which the associated lens (15) is secured, or the cam track is connected to the lens (15) associated with the guidance means or to a lens mount to which the associated lens is secured and the engagement means is connected to the adjustment means.

## Revendications

1. Capteur optoélectronique pour reconnaître des objets à l'intérieur d'une zone de surveillance limitée dans l'espace et réglable, comportant
un émetteur (11) pour émettre un faisceau de lumière d'émission le long d'un axe d'injection d'émission (A) en direction de la zone de surveillance,
un récepteur (21) pour détecter de la lumière qui est réfléchie ou réémise le long d'un axe d'injection de réception (B) par un objet situé à l'intérieur de la zone de surveillance,
ainsi qu'une lentille de focalisation d'émission (15) associée à l'émetteur (11) et une lentille frontale de réception (17) associée au récepteur (21),
l'émetteur (11) et le récepteur (21) étant chacun agencés de manière stationnaire à l'intérieur d'un boîtier, et
la lentille de focalisation d'émission (15) et la lentille frontale de réception (17) pouvant être déplacées par rapport au boîtier à l'aide d'un moyen de réglage,
**caractérisé en ce que**
lors de l'actionnement du moyen de réglage, le tracé du mouvement de la lentille de focalisation d'émission (15) peut être commandé par un moyen de guidage côté émission, et le tracé du mouvement de la lentille frontale de réception (17) peut être commandé simultanément par un moyen de guidage côté réception, de telle sorte que
- par le mouvement de la lentille de focalisation d'émission (15) peut être modifiée la distance entre la lentille de focalisation d'émission (15) et l'émetteur (11), et
- par le mouvement de la lentille frontale de réception (17) peuvent être modifiés l'angle de triangulation (T) entre l'axe d'injection d'émission (A) et l'axe d'injection de réception (B), la distance de base (S) entre l'axe d'injection d'émission (A) et l'axe d'injection de réception (B) à l'emplacement du capteur, la distance (D) entre la lentille frontale de réception (17) et le récepteur (21), et l'alignement de la lentille frontale de réception (17).

2. Capteur optoélectronique selon la revendication 1, **caractérisé en ce qu'**en actionnant le moyen de réglage, l'angle de triangulation (T), la distance de base (S), la distance focale d'émission, la distance focale de réception (D) et l'alignement de la lentille frontale de réception (17) peuvent être modifiés de telle sorte que
dans chaque position du moyen de réglage, le faisceau de lumière d'émission de l'émetteur (11) est focalisé sensiblement sur la zone de surveillance, et/ou
dans chaque position du moyen de réglage, la lumière, qui est réfléchie ou réémise le long de l'axe d'injection de réception (B) par un objet se trouvant à l'intérieur de la zone de surveillance, est focalisée sensiblement sur le récepteur (21).

3. Capteur optoélectronique selon l'une des revendications précédentes, **caractérisé en ce que**
le moyen de réglage est relié en particulier de manière articulée à la lentille de focalisation d'émission (15) ou à une monture de lentille sur laquelle est fixée la lentille de focalisation d'émission (15), et/ou
**en ce que** le moyen de réglage est relié en particulier de manière articulée à la lentille frontale de réception (17) ou à une monture de lentille sur laquelle est fixée la lentille frontale de réception (17).

4. Capteur optoélectronique selon l'une des revendications précédentes, **caractérisé en ce que** le moyen de réglage présente une goupille d'actionnement (23).

5. Capteur optoélectronique selon l'une des revendications précédentes, **caractérisé en ce que** le moyen de guidage côté émission ou le moyen de guidage côté réception présente une coulisse (25, 37) avec un élément de guidage (27, 39), dans lequel fait saillie un élément d'engagement (29, 41) associé, dans lequel
soit la coulisse (37) est agencée solidaire du boîtier et l'élément d'engagement (41) est relié à la lentille (17) associée au moyen de guidage ou à une monture de lentille (19) sur laquelle est fixée la lentille (17), soit la coulisse est reliée à la lentille associée au moyen de guidage ou à une monture de lentille sur laquelle est fixée la lentille associée, et l'élément d'engagement est agencé solidaire du boîtier, ou
soit la coulisse (25) est reliée au moyen de réglage (23) et l'élément d'engagement (29) est relié à la lentille (15) associée au moyen de guidage ou à une monture de lentille sur laquelle est fixée la lentille (15) associée, soit la coulisse est reliée à la lentille associée au moyen de guidage ou à une monture de lentille sur laquelle est fixée la lentille associée, et l'élément d'engagement est relié au moyen de réglage.
